# EUROPÄISCHE PATENTSCHRIFT

(11) **EP 3 938 740 B1**
(45) Veröffentlichungstag und Bekanntmachung des Hinweises auf die Patenterteilung: **20.05.2026**
(21) Anmeldenummer: 20722438.7
(22) Anmeldetag: 16.03.2020
(51) Int. Cl.: G01F 15/00, G01F 15/18, G01F 15/14, G01F 1/22

(54) **VORRICHTUNG UND VERFAHREN ZUM MESSEN UND/ODER REGELN VON EIGENSCHAFTEN EINER MATERIALSTRÖMUNG**
APPARATUS AND METHOD FOR MEASURING AND/OR CONTROLLING PROPERTIES OF A MATERIAL FLOW
DISPOSITIF ET PROCÉDÉ DE MESURE ET/OU DE RÉGULATION DE PROPRIÉTÉS D'UN ÉCOULEMENT DE MATIÈRE

(30) Priorität: 14.03.2019 DE 102019001742
(43) Veröffentlichungstag der Anmeldung: 19.01.2022
(73) Patentinhaber: MFT Meister Flow Technology Holding GmbH & Co. KG, 63831 Wiesen (DE)
(72) Erfinder: BECKER, Peter, 63831 Wiesen (DE); KEUPER, Melanie, 63831 Wiesen (DE)
(74) Vertreter: Nitz, Astrid
(86) Internationale Anmeldenummer: PCT/DE2020/000058
(87) Internationale Veröffentlichungsnummer: WO 2020/182246

(56) Entgegenhaltungen:
- WO-A1-2018/183737
- WO-A1-92/21005
- CN-U- 203 772 331
- DE-A1- 102014 119 073
- DE-A1- 102015 107 578
- DE-A1- 102016 124 358
- DE-A1- 3 312 061
- US-A1- 2008 172 073
- HATZFELD CHRISTIAN ET AL: "Flow sensor for field measurement of viscous liquid usage for consumer studies", 2015 IEEE SENSORS, IEEE, 1 November 2015 (2015-11-01), pages 1 - 4, XP032843912, [retrieved on 20151231], DOI: 10.1109/ICSENS.2015.7370343
- ROCCO GIULIA MARIA ET AL: "3D-Printed Microfluidic Sensor in Substrate Integrated Waveguide Technology", 2018 IEEE MTT-S INTERNATIONAL MICROWAVE WORKSHOP SERIES ON ADVANCED MATERIALS AND PROCESSES FOR RF AND THZ APPLICATIONS (IMWS-AMP), IEEE, 16 July 2018 (2018-07-16), pages 1 - 3, XP033399510, DOI: 10.1109/IMWS-AMP.2018.8457168

## Beschreibung

Die Erfindung betrifft eine Vorrichtung zum Messen und/oder Regeln nach dem Oberbegriff von Anspruch 1 und ein Verfahren zur Herstellung einer Vorrichtung zum Messen und/oder Regeln nach dem Oberbegriff von Anspruch 8.

Aus der Veröffentlichung "Hatzfeld,Christian et al: Flow sensor for field measurement of viscous liquid usage for consumer studies", 2015 IEEE SENSORS, IEEE, 1. November 2015, Seiten 1-4, DOI: 10.1109/ICSENS.2015.7370343, ist ein 3D-gedruckter Durchflusssensor zur Feldmessung des Verbrauchs viskoser Flüssigkeiten für Verbraucherstudien bekannt, wobei der Sensor ein Schwebekörper-Durchflussmesser mit einem federbelasteten Schwebekörper ist, um den Betrieb in allen Positionen sicherzustellen, und die Verschiebung durch einen Hall-Sensor und einen Magneten im Inneren des Schwebekörpers gemessen wird.

Bekannt ist es, eine Vorrichtung zum Messen im Sinne einer Strömungsmesseinrichtung mit Leitungsabschnitten für ein durchströmendes Medium bereitzustellen. Die Vorrichtung muss hohe Belastungen und Drücke aushalten sowie eine Sichtbarkeit des Durchflusses gewährleisten, so dass regelmäßig eine Herstellung aus einem Stahlmaterial erfolgen muss. Es muss weiterhin so ausgebildet sein, dass es an verschiedenste Rohrleitungsabschnitte anpassbar ist und mit diesen zuverlässig verbunden werden kann.

Nachteilig ist es hierbei insbesondere, dass die Herstellung eine große Präzision erfordert und es notwendig ist, eine Vielzahl von Varianten und Adaptern bereitzuhalten.

Aufgabe der vorliegenden Erfindung ist es, eine Vorrichtung zum Messen bereitzustellen, die einfach aufgebaut ist und zugleich die Nachteile des Stands der Technik vermeidet.

Die Aufgabe wird gelöst durch eine Vorrichtung zum Messen und/oder Regeln von Eigenschaften einer Materialströmung, insbesondere Aerosolströmung und/oder Fluidströmung, insbesondere einer Gasströmung, insbesondere einer Luftströmung, und/oder einer Flüssigkeitsströmung, umfassend ein Leitungsmittel für die Materialströmung mit zumindest einem Leitungsabschnitt, insbesondere einen Rohrabschnitt, in dem die Materialströmung durchströmend und/oder umströmend durchleitbar ist, wobei das Leitungsmittel für die Materialströmung mit zumindest einem Leitungsabschnitt mittels eines additiven Fertigungsverfahrens, insbesondere 3D-Druckverfahrens, unter Einsatz eines transparenten Materials im Wesentlichen einstückig als transparenter Bereich aufgebaut ist, wobei im Leitungsabschnitt ein Schwebekörper für einen Schwebekörperdurchflussmesser vorgesehen ist, insbesondere ist der Schwebekörper im selben additiven Fertigungsverfahren, insbesondere 3D-Druckprozess, aufgebaut, wobei auf dem transparenten Bereich mittels des additiven Fertigungsverfahrens, insbesondere 3D-Druckverfahrens, mehrere Farbbereiche und/oder verschiedene Härtegrade integriert sind.

Die erfindungsgemäße Vorrichtung ermöglicht es, in schneller und zuverlässiger Weise individuell angepasste Strömungsmessvorrichtungen aufzubauen, deren Einsatz nahezu unbeschränkt ist. Ein transparenter Bereich muss nicht zusätzlich eingebaut werden sondern wird sogleich im Wesentlichen einstückig integriert bzw. die Vorrichtung kann vollständig aus dem transparenten Material aufgebaut werden, wobei einfach individuell genau angepasste Skalen, Messbereiche, Farbabstufungen, beispielsweise einen Multifarbdruck, erzielt werden können, beispielsweise als Kennzeichnung unterschiedlicher Messbereiche. Durch den zuverlässigen Aufbau können zugleich hohe Drücke gesichert ausgehalten werden ohne dass eine Undichtigkeit entsteht. Im gleichen Druckverfahren können Hart-Weich-Bereiche mitgedruckt werden sowie auch integrierte Dichtelemente exakt eingepasst werden, ohne dass zusätzliche Arbeitsschritte notwendig wären, die Ungenauigkeiten mit sich bringen könnten. Bei einem einheitlichen Materialaufbau ist eine umweltfreundliche Vorrichtung durch bessere Entsorgung oder sogar Recycling möglich. Die Vorrichtung kann für hohe Drücke, insbesondere bei aktuellen Tests beispielhaft 10 bar zuverlässig auch bei höheren Temperaturen bei etwa 60° C eingesetzt werden. Es kann auf einfache Weise eine gezielte Auswahl eines für das Leitungsmittel und die Umgebung passendes Material stattfinden Sind besonders hohe Drücke oder Temperaturen gefragt, kann dies in der Materialauswahl einfach und flexibel berücksichtigt werden.

Vorteilhaft ist es, wenn für den transparenten Bereich ein transparentes polymerbasiertes Kunststoffmaterial einzusetzen ist. Falls der Schichtaufbau beim 3D-Druck eine erhöhte Lichtbrechung mit sich bringt, würde eine Polierung angesetzt werden.

Vorteilhaft ist es, wenn der Leitungsabschnitt des Leitungsmittels zulaufend ausgebildet ist zur Beeinflussung des Strömungsverlaufs für die Materialströmung und/oder Leitungsmittel.

Vorteilhaft ist es, wenn an einem oberen Ende und/oder einem unteren Ende des Leitungsmittels ein Dreheinsatzverbindungsmittel mit einem Nockenmittel zur Verbindung mit einem korrespondierendem Rohrmittel mit einem Einführungsbereich vorgesehen ist, insbesondere mit einem Rastnasenmittel.

Vorteilhaft ist es, wenn auf dem transparenten Bereich mittels des additiven Fertigungsverfahrens, insbesondere 3D-Druckverfahrens, eine Skala, insbesondere rundherum angeordnet, zu integrieren ist.

Vorteilhaft ist es, wenn auf dem Leitungsmittel für die Materialströmung ein elastischer Dichtring, insbesondere mit einer Dichtlippe, die durch einen anliegenden Druck anpressbar ist, im Bereich des oberen Endes und/oder im Bereich des unteren Endes, mittels des additiven Fertigungsverfahrens, insbesondere 3D-Druckverfahrens, mit verschiedenen Materialien, insbesondere Härtegraden, insbesondere umfassend ein elastisches gummiartigen Druckmaterial, zu integrieren ist.

Vorteilhaft ist es, wenn das Leitungsmittel mit einem Mittel zum Anbringen und/oder Hindurchführen einer Funktionseinheit mittels eines additiven Fertigungsverfahrens, im Wesentlichen einstückig, insbesondere mit Metall und/oder Kunststoff und/oder Keramikpulver und/oder Gläser aufzubauen ist, wobei insbesondere mehrere Mittel zum Anbringen und/oder Hindurchführen einer Funktionseinheit vorzusehen sind, insbesondere als normierte Einheit, wobei zumindest eine Funktionseinheit medienberührend und/oder beabstandet zum Medium der Materialströmung einsetzbar ist, wobei das Mittel zum Anbringen und/oder die Funktionseinheit als Außenmittel außen an dem Leitungsmittel, insbesondere ein Ultraschallmesser, und/oder als Wandungsmittel in einer Wandung des Leitungsmittels, insbesondere ein Temperaturfühler, und/oder als Innenmittel innen an dem Leitungsmittel, insbesondere ein Druckmesser und/oder ein pH-Wert-Messer, wobei die Funktionseinheit insbesondere umfasst: insbesondere ein Mittel zum Messen des Drucks, der Temperatur, des Durchflusses, des pH-Wert, des Co₂-Gehalts, der Viskosität, des Härtegrads, des Mineralstoffgehalts, einen Schwebekörper-Durchflussmesser, eine Ultraschallmesseinrichtung, insbesondere ein RFID- und/oder NFC-Mittel und/oder Bluetooth, das insbesondere mit einer Dockingstation und/oder einem Computer und/oder Smartphone gekoppelt ist.

Die Aufgabe wird ebenfalls gelöst durch ein Verfahren zur Herstellung einer Vorrichtung zum Messen und/oder Regeln von Eigenschaften einer Materialströmung, nach einem der Ansprüche 1 bis 7, mittels eines additiven Fertigungsverfahrens, insbesondere 3D-Druckverfahrens, wobei insbesondere beim 3D-Druck aufgebaute Schichten zur Transparenzerhöhung nachzupolieren sind.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- **Fig. 1a**: **eine erfindungsgemäße Vorrichtung in perspektivischer Darstellung,**
- **Fig. 1b**: **eine erfindungsgemäße Vorrichtung in Schnittdarstellung,**
- **Fig. 1c**: **einen Ausschnitt einer erfindungsgemäßen Vorrichtung in Schnittdarstellung,**
- **Fig. 2**: **eine erfindungsgemäße Vorrichtung in Schnittdarstellung,**
- **Fig. 3**: **einen Ausschnitt einer erfindungsgemäßen Vorrichtung in Schnittdarstellung und**
- **Fig. 4a-c**: **einen Ausschnitt einer erfindungsgemäßen Vorrichtung in Schnittdarstellung.**

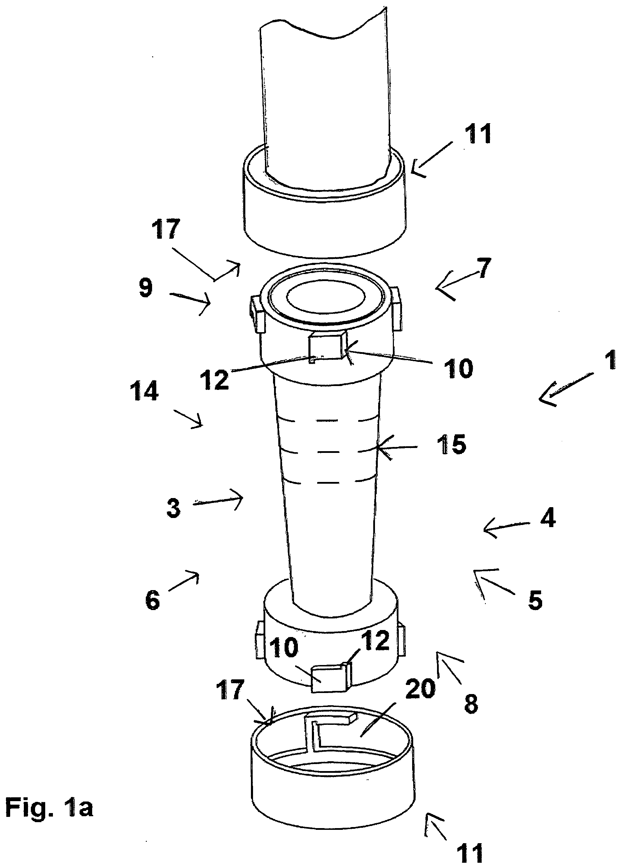

Fig. 1a zeigt eine erfindungsgemäße Vorrichtung 1 zum Messen und/oder Regeln von Eigenschaften einer Materialströmung 2, insbesondere Aerosolströmung und/oder Fluidströmung, insbesondere einer Gasströmung, insbesondere einer Luftströmung, und/oder einer Flüssigkeitsströmung, umfassend ein Leitungsmittel 4 für die Materialströmung 2 mit zumindest einem Leitungsabschnitt 5, insbesondere einen Rohrabschnitt 3, in dem die Materialströmung durchströmend und/oder umströmend durchleitbar ist, wobei das Leitungsmittel 4 für die Materialströmung 2 mit zumindest einem Leitungsabschnitt 5 mittels eines additiven Fertigungsverfahrens, insbesondere 3D-Druckverfahrens, unter Einsatz eines transparenten Materials 6 als transparenter Bereich 14 im Wesentlichen einstückig aufgebaut ist, wobei als transparentes Material 6 beispielhaft ein transparentes polymerbasiertes Kunststoffmaterial einzusetzen ist, wobei der Leitungsabschnitt 5 des Leitungsmittels 4 beispielhaft zulaufend ausgebildet ist zur Beeinflussung des Strömungsverlaufs für die Materialströmung 2 und/oder Leitungsmittel 4, wobei an einem oberen Ende 7 und/oder einem unteren Ende 8 des Leitungsmittels 4 ein Dreheinsatzverbindungsmittel 9 mit einem Nockenmittel 10 zur Verbindung mit einem korrespondierendem Rohrmittel 11 mit einem Einführungsbereich 17 vorgesehen ist, insbesondere mit einem Rastnasenmittel 12. Das Rohrmittel 11 wird beispielhaft auf den Leitungsabschnitt 5 aufgeschoben und auf eine Seite gedreht. Das Nockenmittel 10 an dem Leitungsabschnitt 5 wird so in ein Haltegegenmittel 20 in dem Einführungsbereich 17 eingeschoben. Sobald diese Verschlusshalterung eingeführt ist, wird das Rastnasenmittel 12 somit im Sinne eines korrespondierenden Verschlussmechanismus am Rohrmittel 11 eingerastet, wodurch eine sehr hohe Halterungssicherheit gegeben ist.

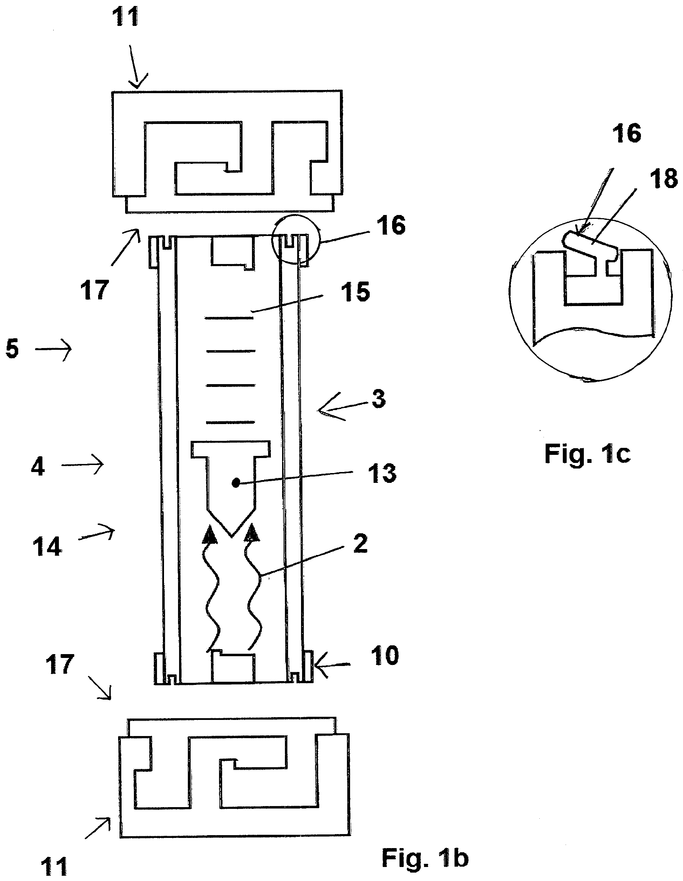

Fig. 1b zeigt eine erfindungsgemäße Vorrichtung 1 in Schnittdarstellung, wobei im Leitungsabschnitt 5 ein Schwebekörper 13 für einen Schwebekörperdurchflussmesser vorgesehen ist, insbesondere ist der Schwebekörper 13 im selben additiven Fertigungsverfahren, insbesondere 3D-Druckprozess, aufbaubar, wobei auf dem transparenten Bereich 14 mittels des additiven Fertigungsverfahrens, insbesondere 3D-Druckverfahrens, mehrere Farbbereiche und/oder verschiedene Härtegrade integriert sind.

Fig. 1c zeigt einen Ausschnitt einer erfindungsgemäßen Vorrichtung 1 in Schnittdarstellung beispielhaft vergrößert dargestellten Dichtrings 16 mit Dichtlippe 18 aus Fig. 1b.

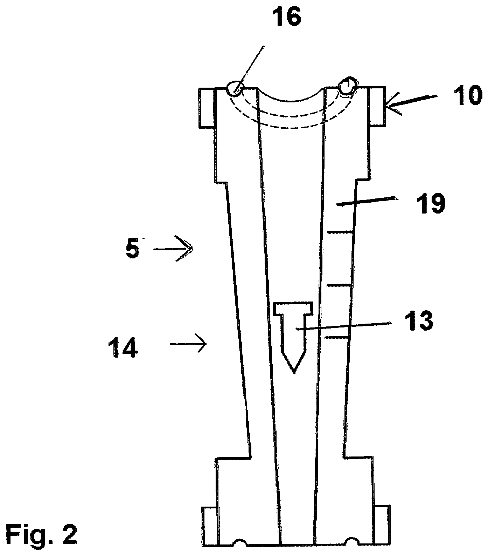

Fig. 2 zeigt eine erfindungsgemäße Vorrichtung 1 in Schnittdarstellung mit einer beispielhaft dickeren Wandung 19 zum Einsatz bei höheren Drücken beispielhaft 10 bar bis 20 bar und einem beispielhaft integrierten Dichtring 16.

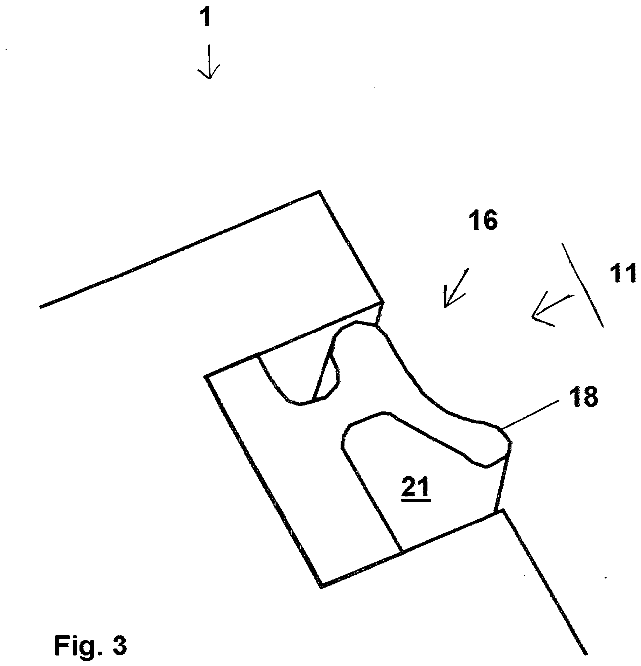

Fig. 3 zeigt einen Ausschnitt einer erfindungsgemäßen Vorrichtung 1 in Schnittdarstellung eines schematischen Dichtrings 16 mit einem Dichtlippenmittel 18, beispielhaft integriert mittels 3D-Druck ausgebildet in einem oberen Ende 7 und/oder einem unteren Ende 8 eines Leitungsmittels 4 zum Ankoppeln an ein Rohrmittel 11, dargestellt beispielhaft in Fig. 1a. Drückt ein beispielhaftes Rohrmittel 11 auf die Dichtlippe 16, wird diese, falls noch eine Flüssigkeit 21 innerhalb des nicht dargestellten Leitungsmittels fließt, durch den Flüssigkeitsdruck noch stärker gegen das Rohrmittel 11 gepresst, wodurch die Dichtigkeit weiter erhöht wird.

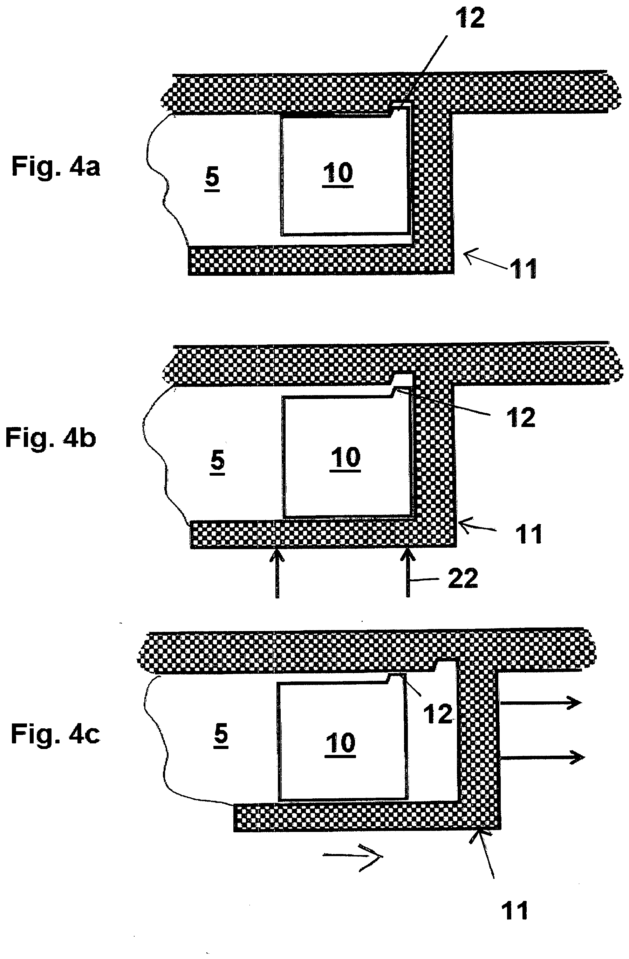

Fig. 4a-c zeigt einen Ausschnitt einer erfindungsgemäßen Vorrichtung 1 in Schnittdarstellung in verschiedenen Einsetzstufen eines schematischen Nockenmittels 10 mit einem Rastnasenmittel 12, beispielhaft integriert in einem oberen Ende 7 und/oder einem unteren Ende 8 eines Leitungsmittels 4 in ein Rohrmittel 11, dargestellt beispielhaft in Fig. 1a. Durch das zusätzliche Rastnasenmittel 12 ist eine doppelte Sicherheit gegen Herausrutschen aus einem beispielhaften Rohrmittel 11 gegeben. Fig. 4a stellt beispielhaft dar, wie das Leitungsmittel 5 mit dem Nockenmittel 10 festgehalten wird und das Rohrmittel 11 gedreht wird, in Fig. 4b von unten aus Richtung 22 gegengedrückt wird und in Fig. 4c gedreht wird.

### BEZUGSZEICHENLISTE

- 1: Vorrichtung zum Messen
- 2: Materialströmung
- 3: Rohrabschnitt
- 4: Leitungsmittel
- 5: Leitungsabschnitt
- 6: transparentes Material
- 7: oberes Ende
- 8: unteres Ende
- 9: Dreheinsatzverbindungsmittel
- 10: Nockenmittel
- 11: Rohrmittel
- 12: Rastnasenmittel
- 13: Schwebekörper
- 14: transparenter Bereich
- 15: Skala
- 16: Dichtring
- 17: Einführungsbereich
- 18: Dichtlippe
- 19: Wandung
- 20: Haltegegenmittel
- 21: Flüssigkeit
- 22: Richtung

## Patentansprüche

1. Vorrichtung (1) zum Messen und/oder Regeln von Eigenschaften einer Materialströmung (2), insbesondere Aerosolströmung und/oder Fluidströmung, insbesondere einer Gasströmung, insbesondere einer Luftströmung, und/oder einer Flüssigkeitsströmung,
umfassend ein Leitungsmittel (4) für die Materialströmung (2) mit zumindest einem Leitungsabschnitt (5), insbesondere einen Rohrabschnitt (3), in dem die Materialströmung durchströmend und/oder umströmend durchleitbar ist,
wobei das Leitungsmittel (4) für die Materialströmung (2) mit zumindest einem Leitungsabschnitt (5) mittels eines additiven Fertigungsverfahrens, insbesondere 3D-Druckverfahrens, unter Einsatz eines transparenten Materials (6) im Wesentlichen einstückig als transparenter Bereich (14) aufgebaut ist,
wobei im Leitungsabschnitt (5) ein Schwebekörper (13) für einen Schwebekörperdurchflussmesser vorgesehen ist, insbesondere ist der Schwebekörper (13) im selben additiven Fertigungsverfahren, insbesondere 3D-Druckprozess, aufgebaut,
**dadurch gekennzeichnet, dass**
auf dem transparenten Bereich (14) mittels des additiven Fertigungsverfahrens, insbesondere 3D-Druckverfahrens, mehrere Farbbereiche und/oder verschiedene Härtegrade integriert sind.

2. Vorrichtung nach Anspruch 1, **dadurch gekennzeichnet, dass** für den transparenten Bereich (14) ein transparentes polymerbasiertes Kunststoffmaterial eingesetzt ist.

3. Vorrichtung nach Anspruch 1 oder 2, **dadurch gekennzeichnet, dass** der Leitungsabschnitt (5) des Leitungsmittels (4) zulaufend ausgebildet ist zur Beeinflussung des Strömungsverlaufs für die Materialströmung (2) und/oder Leitungsmittel (4).

4. Vorrichtung nach einem oder mehreren der Ansprüche 1 bis 3, **dadurch gekennzeichnet, dass** an einem oberen Ende (7) und/oder einem unteren Ende (8) des Leitungsmittels (4) ein Dreheinsatzverbindungsmittel (9) mit einem Nockenmittel (10) zur Verbindung mit einem korrespondierendem Rohrmittel (11) mit einem Einführungsbereich (17) vorgesehen ist, insbesondere mit einem Rastnasenmittel (12).

5. Vorrichtung nach einem oder mehreren der Ansprüche 1 bis 4, **dadurch gekennzeichnet, dass** auf dem transparenten Bereich (14) mittels des additiven Fertigungsverfahrens, insbesondere 3D-Druckverfahrens, eine Skala (15), insbesondere rundherum angeordnet, integriert ist.

6. Vorrichtung nach einem oder mehreren der Ansprüche 1 bis 5, **dadurch gekennzeichnet, dass** auf dem Leitungsmittel (4) für die Materialströmung (2) ein elastischer Dichtring (16), insbesondere mit einer Dichtlippe (18), die durch einen anliegenden Druck anpressbar ist, im Bereich des oberen Endes (7) und/oder im Bereich des unteren Endes (8), mittels des additiven Fertigungsverfahrens, insbesondere 3D-Druckverfahrens, mit verschiedenen Materialien, insbesondere Härtegraden, insbesondere umfassend ein elastisches gummiartigen Druckmaterial, integriert ist.

7. Vorrichtung nach einem der Ansprüche 1 bis 6, **dadurch gekennzeichnet, dass** das Leitungsmittel (4) mit einem Mittel zum Anbringen und/oder Hindurchführen einer Funktionseinheit mittels eines additiven Fertigungsverfahrens, im Wesentlichen einstückig, insbesondere mit Metall und/oder Kunststoff und/oder Keramikpulver und/oder Gläser aufgebaut ist, wobei insbesondere mehrere Mittel zum Anbringen und/oder Hindurchführen einer Funktionseinheit vorgesehen sind, insbesondere als normierte Einheit, wobei zumindest eine Funktionseinheit medienberührend und/oder beabstandet zum Medium der Materialströmung einsetzbar ist, wobei das Mittel zum Anbringen und/oder die Funktionseinheit als Außenmittel außen an dem Leitungsmittel (4), insbesondere ein Ultraschallmesser, und/oder als Wandungsmittel in einer Wandung des Leitungsmittels (4), insbesondere ein Temperaturfühler, und/oder als Innenmittel innen an dem Leitungsmittel (4), insbesondere ein Druckmesser und/oder ein pH-Wert-Messer, wobei die Funktionseinheit insbesondere umfasst: insbesondere ein Mittel zum Messen des Drucks, der Temperatur, des Durchflusses, des pH-Wert, des Co²-Gehalts, der Viskosität, des Härtegrads, des Mineralstoffgehalts, einen Schwebekörper-Durchflussmesser, eine Ultraschallmesseinrichtung, insbesondere ein RFID- und/oder NFC-Mittel und/oder Bluetooth, das insbesondere mit einer Dockingstation und/oder einem Computer und/oder Smartphone gekoppelt ist.

8. Verfahren zur Herstellung einer Vorrichtung (1) zum Messen und/oder Regeln von Eigenschaften einer Materialströmung (2), nach einem der Ansprüche 1 bis 7, mittels eines additiven Fertigungsverfahrens, insbesondere 3D-Druckverfahrens, wobei insbesondere beim 3D-Druck aufgebaute Schichten zur Transparenzerhöhung nachzupolieren sind.

## Claims

1. Apparatus (1) for measuring and/or controlling properties of a material flow (2), in particular aerosol flow and/or fluid flow, in particular a gas flow, in particular an air flow, and/or a liquid flow, comprising a conduction means (4) for the material flow (2) with at least one line section (5), in particular a pipe section (3) in which the material flow can be conducted through and/or circumferential, wherein the line means (4) for the material flow (2) with at least one pipe section (5) by means of an additive manufacturing process, in particular 3D printing process, using a transparent material (6) is essentially constructed as a single-piece transparent area (14), wherein in the pipe section (5) a variable area (13) is provided for a variable area flow meter, in particular the variable area (13) is constructed in the same additive manufacturing process, in particular 3D printing process **characterized in that** several color areas and/or different hardness levels are integrated in the transparent area (14) by means of the additive manufacturing process, in particular the 3D printing process.

2. Apparatus according to claim 1, **characterized in that** a transparent polymer-based plastic material is used for the transparent area (14).

3. Apparatus according to claim 1 or 2, **characterized in that** the line section (5) of the line means (4) is designed to flow in to influence the flow path for the material flow (2) and/or line means (4).

4. Apparatus according to one or more of claims 1 to 3, **characterized in that** at an upper end (7) and/or a lower end (8) of the line means (4) a rotary insert fastener (9) with a cam means (10) is provided for connection with a corresponding pipe means (11) with an insertion area (17), in particular with a locking nose means (12).

5. Apparatus according to one or more of claims 1 to 4, **characterized in that** a scale (15), in particular arranged all around, is integrated on the transparent area (14) by means of the additive manufacturing process, in particular the 3D printing process.

6. Apparatus according to one or more of claims 1 to 5, **characterized in that** an elastic sealing ring (16), in particular with a sealing lip (18) that can be pressed by an adjacent pressure, is integrated in the area of the upper end (7) and/or in the area of the lower end (8) on the guiding means (4) for the material flow (2) by the additive manufacturing process, in particular 3D printing process, with different materials, in particular hardness grades, in particular comprising an elastic rubber-like pressure material.

7. Apparatus according to any one of claims 1 to 6, **characterized in that** the conduction means ( 4) is constructed with a means for attaching and/or passing through a functional unit by means of an additive manufacturing process, essentially one-piece, in particular with metal and/or plastic and/or ceramic powder and/or glasses, wherein in particular several means are provided for attaching and/or passing through a functional unit, in particular as a standardised unit, whereby at least one functional unit can be used in contact with the media and/or at a distance from the medium of the material flow, wherein the means for attachment and/or the functional unit can be used as an external means on the outside of the line means (4), in particular an ultrasonic knife, and/or as a wall means in a wall of the line means (4), in particular a temperature sensor, and/or as an internal means on the inside of the line means (4), particularly a pressure gauge and/or a pH meter, wherein the functional unit particularly comprises: particularly a means for measuring pressure, temperature, flow rate, pH value, CO2 content, viscosity, hardness, mineral content, a float flow meter, an ultrasonic measuring device, particularly an RFID and/or NFC means and/or Bluetooth, which is particularly coupled with a docking station and/or a computer and/or smartphone.

8. Method for producing a apparatus (1) for measuring and/or regulating properties of a material flow (2), according to one of claims 1 to 7, by means of an additive manufacturing process, in particular a 3D printing process, wherein in particular the layers built up in 3D printing are to be polished to increase transparency.

## Revendications

1. Dispositif (1) de mesure et/ou de régulation de propriétés d'un écoulement de matière (2), en particulier un écoulement d'aérosol et/ou un écoulement de fluide, notamment un écoulement de gaz, en particulier un écoulement d'air, et/ou un écoulement de liquide, comprenant un moyen de conduite (4) pour l'écoulement de matière (2) comportant au moins une section de conduite (5), en particulier un tronçon tubulaire (3), dans lequel le flux de matière peut être acheminé par écoulement à l'intérieur et/ou par écoulement autour, le moyen de conduite (4) pour le flux de matière (2) comportant au moins un tronçon de conduite (5) étant réalisé au moyen d'un procédé de fabrication additive, en particulier d'un procédé d'impression 3D, en utilisant un matériau transparent (6), est essentiellement constitué d'une seule pièce formant une zone transparente (14), un flotteur (13) pour un débitmètre à flotteur étant prévu dans la section de conduite (5), le flotteur (13) étant notamment fabriqué selon le même procédé de fabrication additive, en particulier un procédé d'impression 3D, **caractérisé en ce que** plusieurs zones colorées et/ou différents degrés de dureté sont intégrés sur la zone transparente (14) au moyen du procédé de fabrication additive, en particulier du procédé d'impression 3D.

2. Dispositif selon la revendication 1, **caractérisé en ce qu'**un matériau plastique transparent à base de polymère est utilisé pour la zone transparente (14).

3. Dispositif selon la revendication 1 ou 2, **caractérisé en ce que** la section de conduit (5) du moyen de conduit (4) est conçue de manière conique afin d'influencer le tracé de l'écoulement pour l'écoulement de matière (2) et/ou le moyen de conduit (4).

4. Dispositif selon une ou plusieurs des revendications 1 à 3, **caractérisé en ce qu'**un moyen de raccordement à insert rotatif (9) muni d'un moyen de came (10) destiné à la connexion avec un moyen de tuyau correspondant (11) comportant une zone d'insertion (17), en particulier un moyen de languette d'encliquetage (12).

5. Dispositif selon l'une ou plusieurs des revendications 1 à 4, **caractérisé en ce qu'**une échelle (15), disposée notamment tout autour, est intégrée sur la zone transparente (14) au moyen d'un procédé de fabrication additive, en particulier d'un procédé d'impression 3D.

6. Dispositif selon l'une ou plusieurs des revendications 1 à 5, **caractérisé en ce qu'**un joint d'étanchéité élastique (16), en particulier muni d'une lèvre d'étanchéité (18) pouvant être pressée par une pression appliquée, est intégré sur le moyen de conduite (4) pour l'écoulement de matière (2), dans la zone de l'extrémité supérieure (7) et/ou dans la zone de l'extrémité inférieure (8), au moyen du procédé de fabrication additive, en particulier du procédé d'impression 3D, avec différents matériaux, en particulier différents degrés de dureté, comprenant notamment un matériau de pression élastique de type caoutchouc.

7. Dispositif selon l'une des revendications 1 à 6, **caractérisé en ce que** le moyen de guidage (4) est constitué, essentiellement d'un seul tenant, notamment à partir de métal et/ou de plastique et/ou de poudre céramique et/ou de verre, d'un moyen permettant de fixer et/ou de faire passer une unité fonctionnelle au moyen d'un procédé de fabrication additive, plusieurs moyens de fixation et/ou de passage d'une unité fonctionnelle étant notamment prévus, en particulier sous forme d'unité normalisée, au moins une unité fonctionnelle pouvant être utilisée en contact avec le fluide et/ou à distance du fluide dans l'écoulement de matière, le moyen de fixation et/ou l'unité fonctionnelle pouvant être disposé(e) à l'extérieur du moyen de conduite (4) en tant que moyen extérieur, en particulier un débitmètre à ultrasons, et/ou en tant que moyen de paroi dans une paroi du moyen de conduite (4), en particulier une sonde de température, et/ou en tant que moyen interne à l'intérieur du moyen de conduite (4), en particulier un manomètre et/ou un pH-mètre, l'unité fonctionnelle comprenant notamment : notamment un moyen de mesure de la pression, la température, le débit, le pH, la teneur en CO₂, la viscosité, le degré de dureté, la teneur en minéraux, un débitmètre à flotteur, un dispositif de mesure à ultrasons, en particulier un moyen RFID et/ou NFC et/ou Bluetooth, qui est notamment couplé à une station d'accueil et/ou à un ordinateur et/ou à un smartphone.

8. Procédé de fabrication d'un dispositif (1) de mesure et/ou de régulation de propriétés d'un flux de matière (2), selon l'une des revendications 1 à 7, au moyen d'un procédé de fabrication additive, en particulier d'un procédé d'impression 3D, les couches formées lors de l'impression 3D devant notamment être polies a posteriori afin d'améliorer la transparence.
